# EUROPEAN PATENT SPECIFICATION

(11) **EP 1 287 631 B1**
(45) Date of publication and mention of the grant of the patent: **11.10.2006**
(21) Application number: 01938895.8
(22) Date of filing: 31.05.2001
(51) Int. Cl.: H04L 1/00

(54) **LINK ADAPTATION FOR CELLULAR RADIO SYSTEM**
VERBINDUNGSANPASSUNG FÜR ZELLULARES FUNKSYSTEM
ADAPTATION DE LIAISON POUR SYSTEME TELEPHONIQUE MOBILE CELLULAIRE

(30) Priority: 06.06.2000 SE 0002168
(43) Date of publication of application: 05.03.2003
(73) Proprietor: TELEFONAKTIEBOLAGET LM ERICSSON (publ), 164 83 Stockholm (SE)
(72) Inventor: DAHLMAN, Erik, S-168 68 Bromma (SE); ANDREASSON, Henrik, S-121 33 Enskededalen (SE); SUNDELIN, Magnus, S-182 74 Stocksund (SE); GÖRANSSON, Bo, S-113 48 Stockholm (SE); PARKVALL, Stefan, S-113 22 Stockholm (SE)
(74) Representative: Kühn, Friedrich Heinrich
(86) International application number: PCT/SE2001/001226
(87) International publication number: WO 2001/095548

(56) References cited:
- WO-A-95/15033
- US-A- 5 511 079
- US-A- 5 722 051
- US-A- 5 771 461
- US-A- 5 946 356

## Description

### FIELD OF INVENTION

The present invention relates to a method and devices for link adaptation in a cellular radio system.

### DESCRIPTION OF RELATED ART

Usage of mobile communication equipment for transmission of digital data rather than speech has become increasingly popular among consumers. The ability to send and receive electronic mail and to use a web browser to obtain world-wide-web access is frequently discussed among services that will be used more and more in wireless communication systems. In response to this, mobile communication system designers search for ways to efficiently transfer data information to and from mobile users. Especially, it is desirable to be able to send data having as high data rate as the instantaneous radio channel quality permits.

In a mobile telecommunication system, the quality of the radio channel depends on a wide range of radio conditions including the distance between a receiver, e.g. a mobile station, and a transmitter, e.g. a base station, interference from other transmitters in the neighborhood, shadowing, short term fading, etc. As the radio conditions can be rapidly varying for each considered transmitter-to-receiver link, the radio channel quality for a transmitter-to-receiver link may consequently vary rapidly. If the radio channel quality is high, the transmitter may exploit this fact to transmit to the receiver at a higher data rate by adjusting the transmission parameters, e.g. reduce the amount of error protection, i.e. redundancy, or use higher order modulation. Similarly, if the radio channel quality is low, the transmission parameters may need to be adjusted to ensure reliable reception of the transmitted information having a lower data rate. Modifying the transmission parameters in accordance with the radio channel quality variations is often termed "link adaptation" and allows the overall performance of the system to be significantly improved. Link adaptation can be accomplished by, e.g. changing the modulation and/or channel coding scheme (MCS). Different modulation and coding schemes can be provided through different modulation techniques, code rates, and puncturing schemes. Other means to accomplish link adaptation is also possible.

In order to implement link adaptation, information about the current radio channel quality is needed at the transmitter end. This can be provided by letting the receiver estimate the radio channel quality and feed this information back to the transmitter. Naturally, this requires the possibility for the receiver to estimate the radio channel quality and means for feeding back this information to the transmitter. The radio channel quality can be estimated in a number of different ways. The receiver may e.g. estimate the received signal-to-interference ratio, by measuring the received signal strength of a signal transmitted at a known constant power, such as a pilot signal, and the overall interference.

One interesting application of link adaptation is for a downlink shared channel (DSCH) in a CDMA-based system. The downlink shared channel in a CDMA system is a code or set of codes shared by several users in, among other techniques, a time multiplexed fashion. Each of the users sharing the DSCH is also allocated a downlink dedicated physical channel (DPCH) which is power controlled. In existing systems, all the dedicated physical channels are code multiplexed with the DSCH. A man in the art understands that other means of multiplexing may be used in the same way. Although this disclosure is directed towards WCDMA, the idea is general and can be applied to other cellular systems as well, e.g. various evolutions of IS95 and cdma2000.

In systems using conventional link adaptation (LA), the mobile station estimates the instantaneous quality of the radio channel. Based on the quality estimate, the mobile station transmits a request for an appropriate modulation and/or coding scheme to the base station. Alternatively, the mobile station reports the quality estimate to the base station. Based on this report, the base station then decides on the modulation and coding scheme used to communicate with the mobile station. It should be noted that the mobile station cannot determine the instantaneous radio channel quality from the above mentioned downlink dedicated physical channel as it is power controlled and, hence, ideally received at an almost constant signal-to-interference ratio regardless of the radio channel quality.

Generally, a base station is considered having a downlink shared channel (DSCH), possibly non-power controlled, used by several users for data transmission in a primarily time-multiplexed fashion. Additionally, a power controlled downlink dedicated physical channel (DPCH) is associated with each active mobile station sharing the DSCH and is used for transmitting control information to the mobile station. In existing systems, link adaptation of the DSCH in such a system is accomplished by letting the mobile station (MS) estimate the radio channel quality based on the received signal-to-interference ratio of a non-power-controlled common pilot signal broadcast by the base station and report this estimated quality, or a function thereof, back to the base station. The base station uses this feedback information to adjust the modulation and coding scheme (MCS) on the downlink shared channel to suit the current radio channel quality. This approach requires feeding information about the estimated radio channel quality from the mobile station back to the base station in addition to the power control commands already transmitted from the mobile station to the base station.

Power control for the downlink dedicated physical channel (DPCH) is typically accomplished by the mobile station regularly measuring the received signal-to-interference ratio on the DPCH, comparing with a threshold, and sending up/down commands back to the base station, which adjusts the transmit power of the DPCH in accordance with these commands. Hence, the received signal-to-interference ratio on the DPCH is ideally kept constant.

According to other methods, the instantaneous transmit power of the DPCH is set by the transmitter based on some parameters in the base station indicating the downlink channel quality. A man skilled in the art understands that other means for setting the instantaneous power DPCH, either alone or in combination with the method disclosed above, may be used.

The patent document US-5946356 describes a system having fundamental and supplemental channels used for control and information transmission, respectively. As US-5946356 focuses on the cdma2000 standard, the terminology is the one used within the cdma2000 community. The main objective of US-5946356 is to provide a method and arrangement for allocating a fundamental channel only when a supplemental channel is available in order to avoid waste of precious resources on a fundamental channel, which is not used due to the lack of an available supplemental channel. A fundamental channel is assigned shortly prior to supplemental channel availability, reducing the amount of time a remote unit utilizes a fundamental channel and increasing the number of channels available to the system. Initialization of those channels is also discussed. In US-5946356 a method for initial power control of the fundamental channel being used for control information transmission, and a method for using the fundamental channel to set the appropriate power level for the supplemental channel being used for information transmission is also disclosed. Furthermore, in US-5946356 a system is disclosed having a fixed relation between the output power for the supplemental channel and the associated fundamental channel. US-5946356 is concerned with setting the power level of the supplemental channel based on the power level on the fundamental channel and is not concerned with changing the modulation and coding scheme according with the channel quality. Thus, US-5946356 does not discuss problems related to link adaptation.

US-5,722,051 assigned to Lucent Technologies Inc discloses a dynamic combined power control and forward error correction control (FEC) technique for mobile radio systems, which is claimed to reduce the power consumed by wireless transmitters and increase the number of simultaneous connections which may be supported thereby. Individual transmitter-receiver pairs may adaptively determine the minimal power and FEC required to satisfy specified quality-of-service (QoS) constraints. I.e. US-5722051 describes a technique for setting the power level and coding scheme for a set of data to be transmitted based on parameters received from the receiver. These parameters are computed by the receiver based on a previously received set of data from the transmitter. Generally speaking, methods for controlling the coding scheme and power level based on explicit feedback information from the receiver are well known for a person skilled in the art, as disclosed above. In US-5,722,051, the benefits of letting the receiver directly control the transmitted power on the downlink shared channel and indirectly the modulation and coding scheme on the dedicated physical channel are neither disclosed nor discussed.

WO 95/15033, assigned to Thomson Consumer Electronics, Inc., is related to the field of digital satellite communication systems, and more particularly to error correcting apparatus in a receiver of such a system. WO 95/15033 describes one possibility of changing the coding rate of a transmitted signal based on the transmitted power of the same signal. WO 95/15033 is concerned with the problem of matching the amount of redundancy added by error correction coding to the different transmitted power levels used by a satellite on the channel which transmits the information. Thus, WO 95/15033 does not consider problems related to link adaptation.

US-5828695, assigned to British Telecommunications, describes a system varying the QAM modulation scheme used in the transmitter part of a transceiver based on the received signal strength measured by the receiver in the same transceiver. Thus, US-5828695 does not consider problems related to link adaptation.

### SUMMARY OF THE INVENTION

A problem with proposed and/or existing systems using link adaptation is that the link adaptation relies on explicit uplink signaling related to the downlink radio channel quality, i.e. it increases the amount of data to be transmitted from the mobile station to the base station.

Another problem is encountered if adaptive antennas are used, where user data on the Downlink Shared Channel (DSCH) is to be transmitted in narrow beams covering only a part of the cell. In this case, it can be difficult, or even impossible, for the mobile station to estimate the radio channel quality related to the DSCH based on a broadcast common pilot signal since the broadcast common pilot signal will encounter a different radio conditions compared to the non-broadcast DSCH transmitted through the adaptive antenna. The radio channel quality estimated from the broadcast common pilot signal will thus be different from the radio channel quality experienced by DSCH transmission within a narrow beam.

The inventive solution of the problem is based on letting the instantaneous power allocated at the transmitter for the closed loop power controlled downlink dedicated physical channel (DPCH) control the modulation and/or coding scheme of the downlink shared channel (DSCH). The transmitted DSCH power should be used rather than the received DPCH power as the DPCH is power controlled and thus the signal-to-interference ratio at the receiver is, more or less, constant, giving no information about the varying radio channel quality. It should be noted that a further reason for not using the received DPCH power is that this would not solve the first problem with the existing methods, i.e. it would require feedback signaling from the mobile station to the base station.

A method and arrangement according to the invention selects the modulation and coding scheme MCS on a non-power-controlled downlink shared channel (DSCH) based on the amount of transmit power allocated to the downlink dedicated physical channel (DPCH) corresponding to the mobile station currently using the DSCH. Each mobile station in the system that takes part in sharing the DSCH has access to one associated DPCH. The DSCH is shared between the users in some way, e.g. in a time division fashion, wherein one user at a time uses the resources, and is not power controlled by any of the users. In a preferred embodiment, the procedure of selecting an appropriate modulation and coding scheme MCS for the DSCH as a function of the power level on the DPCH associated with the user currently using the DSCH is repeated each time the transmitted power of the associated DPCH changes.

In a preferred embodiment of the invention, the transmitted power used by the downlink shared channel (DSCH) is constant over time and the modulation and coding scheme MCS used at each time instant is given by the power used by another power controlled downlink dedicated physical channel (DPCH), namely the DPCH associated with the user currently assigned the downlink shared channel.

According to a preferred embodiment, the inventive method is provided by means of a computer program product directly loadable into the internal memory of a digital computer, said computer being located or connected to the base station.

A purpose of the inventive system and arrangement is to facilitate the selection of a suitable modulation and/or coding scheme of a common downlink channel, the system being provided or not provided with adaptive antennas, and without introducing any new feedback information or other overhead.

A further purpose of the inventive system and arrangement is to provide link adaptation without having to transmit explicit link adaptation information from the mobile station to the base station

An advantage of the inventive system and arrangement is that they facilitate the selection of a suitable modulation and/or coding scheme of a common downlink channel, the system being provided or not provided with adaptive antennas, and without introducing any new feedback information or other overhead.

A further advantage of the inventive system and arrangement is that no explicit link adaptation information has to be transmitted from the mobile station to the base station, i.e. there is no need for changing the format of the reverse link compared to current standards.

The term "comprises/comprising" when used in this specification is taken to specify the presence of stated features, integers, steps or components but does not preclude the presence or addition of one or more other features, integers, steps, components or groups thereof.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

- Figure 1: is a block diagram illustrating a communication system for which the invention applies.
- Figure 2: is a flowchart illustrating a method according to the invention.
- Figure 3: is a diagram illustrating an example of how the MCS used by different users on the downlink shared channel (DSCH) at different times are controlled by the power used by the dedicated physical channel (DPCH).
- Figure 4: is a flowchart illustrating an example of the mapping procedure.
- Figure 5: is a flowchart illustrating a method according to the invention involving several users.

The invention will now be described in more detail with reference to preferred exemplifying embodiments thereof and also with reference to the accompanying drawings.

### DETAILED DESCRIPTION

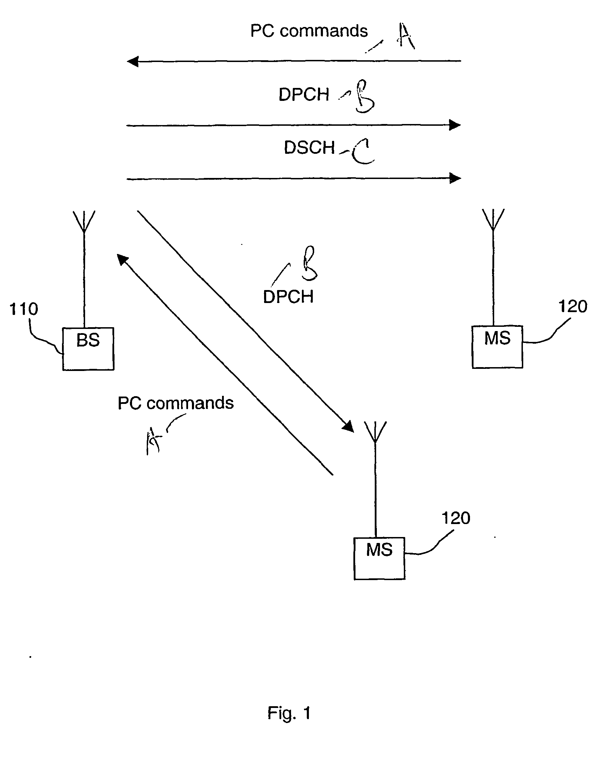

In figure 1, a communication system using three channels is illustrated in more details. The naming of the channels is taken from WCDMA and other names might be used for other similar systems in which the invention can be applied. The Downlink Shared Channel (DSCH) is a common channel for transmitting information from a base station (BS) 110 to a mobile station (MS) 120, the channel being shared by several users, e.g. in a time division fashion, code division fashion, or combinations thereof. In an inventive system, this channel is not power controlled, but uses a varying modulation and coding scheme (MCS) to adapt to the rapidly changing radio channel quality. The Downlink Dedicated Physical Channel (DPCH) is a dedicated channel (one per user) for the transmission of information from the base station to the mobile stations, typically carrying, among other things, control information. It is power controlled and, hence, is ideally received at a constant signal-to-interference ratio at the mobile station. Power Control (PC) commands are sent from each mobile station to the base station on a separate uplink in order to adjust the DPCH transmit power so that a fixed signal-to-interference ratio is maintained for DPCH at the mobile station. When the received signal-to-interference ratio lies below a certain threshold, the mobile station instructs the base station to increase the DPCH transmit power. Similarly, if the received signal-to-interference ratio lies above the threshold, the mobile station sends PC commands to the base station so that the DPCH transmit power is decreased.

In the method and system according to the invention, the modulation and coding scheme used on the DSCH is set by the power used by the base station for the DPCH. If the amount of power used for the DPCH corresponding to the mobile station currently using the DSCH is high, the radio channel, i.e. the downlink from the base station to the mobile station, is presumably of low quality and a modulation and coding scheme suitable for this kind of channel should be used. If the amount of power used for the DPCH by the base station is low, the radio channel is of high quality and a modulation and coding scheme supporting a high rate at the cost of being more sensitive to channel impairments is suitable. By using this scheme, explicit feedback from the receiver to select the modulation and coding scheme of the DSCH is avoided. Furthermore, adaptive antennas can be used on the link adapted DSCH, which is not possible if the radio channel quality is estimated based on mobile station measurements on a received common pilot broadcast over the entire cell.

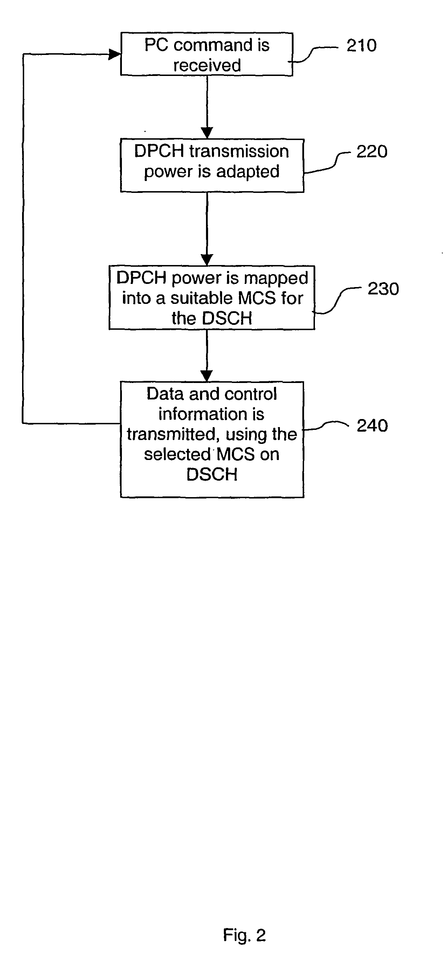

Fig. 2 is a flowchart illustrating a method according to the invention. The method disclosed in connection with fig. 2 is performed at the base station. In block 210 the base station receives the power control (PC) commands from the mobile station. Then, in block 220 the transmission power for the dedicated physical channel DPCH is adjusted according to the PC commands received in block 210. Thereafter, in block 230, the transmit power used for the dedicated physical channel is mapped into a suitable modulation and coding scheme (MCS) for the downlink shared channel (DSCH). It should be noted that the MCS is only used on DSCH if the user of this DPCH is allocated to the DSCH. Finally, in block 240, data is transmitted on the DSCH using the previously selected modulation and/or coding scheme. At the same time, control, and possibly other information is transmitted on the DPCH using any non-changing modulation technique agreed upon, such as QPSK. The procedure according to the blocks 210-240 are repeated with regular intervals.

Compared to conventional systems, e.g. systems according to the WCDMA standard, the method according to fig. 2 is new with respect to two features. First, the inventive idea resides in the mapping of the power used in the dedicated physical channel into a suitable modulation and coding scheme. Secondly, in the method according to the invention, a varying modulation coding scheme is used on the downlink shared channel. The second feature is well known, but currently not used in systems according to the WCDMA standard.

The mapping between the power level P_{DPCH} of the downlink dedicated physical channel (DPCH) and the modulation and coding scheme MCS chosen for the downlink shared channel DSCH can e.g. be implemented in form a table or a similar arrangement, see e.g. Table 1.

**Table 1**

| P_{DPCH} power range | MCS for DSCH |
|---|---|
| P_{DPCH} ≥ P₁ | MCS = MCS₁ |
| P₁ > P_{DPCH} ≥ P₂ | MCS = MCS₂ |
| P₂ > P_{DPCH} ≥ P₃ | MCS = MCS₃ |
| P₃ > P_{DPCH} ≥ P₄ | MCS = MCS₄ |
| P₄ > P_{DPCH} ≥ P₅ | MCS = MCS₅ |
| P₅ > P_{DPCH} ≥ P₆ | MCS = MCS₆ |
| P₆ > P_{DPCH} ≥ P₇ | MCS = MCS₇ |
| P₇ > P_{DPCH} | MCS = MCS₈ |

The mapping between the power level P_{DPCH} of the DPCH and the modulation and coding scheme MCS chosen for the DSCH as e.g. implemented by a table like Table 1 can be either static or dynamic. In the static case, the power levels Pi in Table 1 are typically chosen in advance by the operator. An example of a static mapping is shown in Table 2.

**Table 2**

| P_{DPCH} power range (in percent of full power) | MCS | Code rate | Modulation |
|---|---|---|---|
| P_{DPCH} ≥ P₁ = 60% | MCS₁ | 1/2 | QPSK |
| 60% = P₁ > P_{DPCH} ≥ P₂ = 50% | MCS₂ | 3/4 | QPSK |
| 50% = P₂ > P_{DPCH} ≥ P₃ = 30% | MCS₃ | 1/2 | 8PSK |
| 30% = P₃ > P_{DPCH} ≥ P₄ = 20% | MCS₄ | 3/4 | 8PSK |
| 20% = P₄ > P_{DPCH} ≥ P₅ = 15% | MCS₅ | 1/2 | 16QAM |
| 15% = P₅ > P_{DPCH} ≥ P₆ = 10% | MCS₆ | 3/4 | 16QAM |
| 10% = P₆ > P_{DPCH} ≥ P₇ = 5% | MCS₇ | 1/2 | 64QAM |
| 5% = P₇ > P_{DPCH} | MCS₈ | 3/4 | 64QAM |

In Table 2, PSK means Phase Shift Keying. QPSK means Quaternary Phase Shift Keying. QAM means Quadrature Amplitude Modulation. The integers 8, 16, and 64 indicate the amount of signaling alternatives.

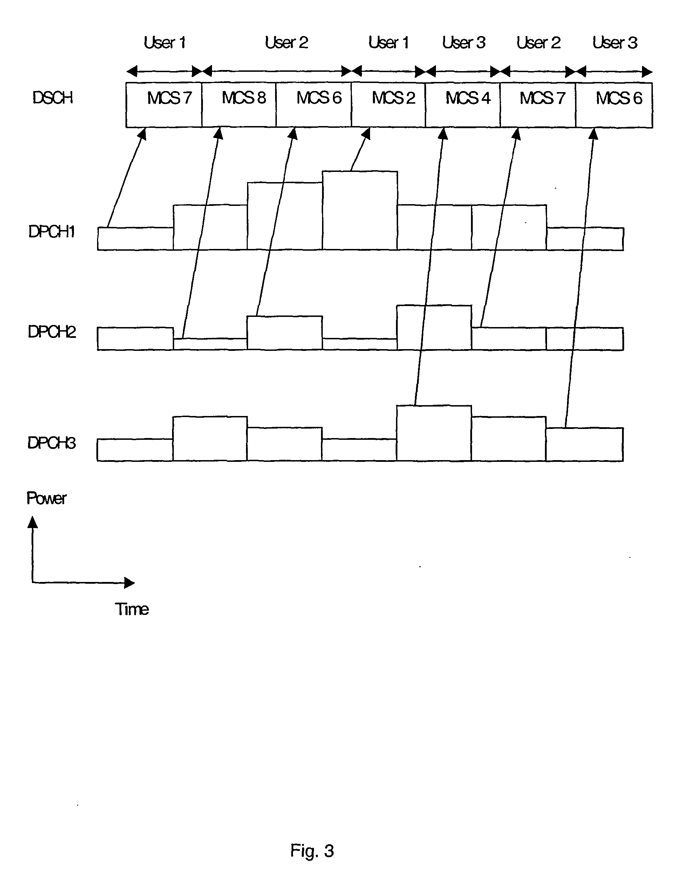

Fig. 3 is a diagram showing an example of how the modulation and coding scheme MCS used by different users on the downlink shared channel DSCH at different times is controlled by the power used by the respective downlink dedicated physical channels (DPCH). In fig. 3, a case wherein three users share a DSCH is illustrated. In the example shown in fig. 3, different modulation and coding schemes, denoted MCS1 through MCS8, may be selected to be used by the DSCH. MCS8 denotes the modulation and coding scheme yielding the highest data rate but requiring the best radio channel quality. On the other hand, MCS1 results in a low data rate, but is robust to bad radio conditions. As is shown in fig. 3, the DSCH is transmitted at a constant power level, i.e. the channel is not power controlled by any of the mobile stations. However, the dedicated physical channels are power controlled. The transmit power for each of the dedicated physical channels is thus adjusted in order to keep the received signal-to-interference ratio at the mobile unit constant.

In fig. 3 is shown that the scheduler has assigned the downlink shared channel (DSCH) to user 1 for some amount of time determined by the scheduling algorithm, for example one slot duration. The power used by user 1 on its associated dedicated physical control channel, DPCH1, is quite low, indicating good conditions on the link from the base station to the mobile station of user 1 and, hence, a fairly advanced modulation and coding scheme can be used (in the case MCS7). After some time, the scheduler has decided to assign the DSCH to user 2, and since the mobile unit of user 2 also consumes very little power on its associated DPCH2, and therefore is provided with good channel properties, MCS8 is chosen for the DSCH resulting in the highest bit rate. At a later stage, the DSCH is still assigned to user 2 by the scheduler, but the channel quality has degraded and consequently, the transmitted power on DPCH2 is increased, for example due to a fading dip. A lower rate MCS, in this case MCS6 will therefore be used. The procedure of selecting an appropriate modulation and coding scheme for the DSCH depending on the power level on the dedicated physical channel associated with the user currently using the DSCH is repeated as times evolves, which is clearly seen in fig. 3.

According to the invention, the user given the downlink shared channel (DSCH) at any given time is determined by a scheduling algorithm operating according to some set of rules. One simple scheduling algorithm could be to cyclically assign the DSCH to the mobile stations in a round robin fashion, but other, more advanced algorithms are also possible.

In a case where the downlink dedicated physical channel is transmitted simultaneously from two, or more, separate base stations, so called soft handover, the transmit power of the DPCH is lower than in the case DPCH was only transmitted from the base station from which the Downlink Shared channel is transmitted. In this case, the DPCH transmit power will thus not necessarily provide the correct MCS. A solution to this problem is to multiply the DPCH power with a constant k, the constant k being a function of the number of base stations involved in the soft handover.

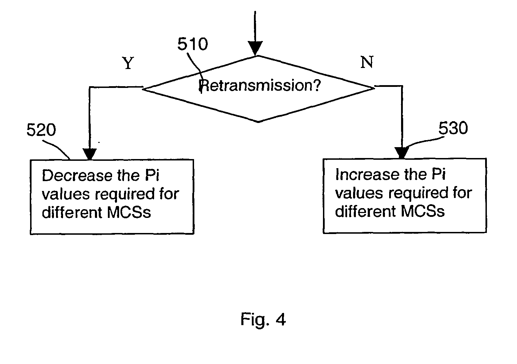

Fig. 4 is a flowchart illustrating an example dynamic updating of the mapping table in table 1. The flowchart in fig. 4 is thus an example of how to define the mapping process disclosed in block 230 in fig. 2. Fig. 4 illustrates a dynamic scheme, the mapping being changed as a function of some retransmission requests for the data blocks transmitted over the downlink shared channel. For each retransmission request, see block 510, from a certain user, the flow goes to block 520 and the transmitter decreases the power levels Pi required to select a certain modulation and coding scheme, making the mapping more robust and conservative. Similarly, if no retransmission request is made for a data block, the flow goes to block 530 and the transmitter interprets this as the mapping being too conservative and raises the thresholds Pi for the different modulation and coding schemes. For the next data block, the procedure disclosed in fig. 4 is iterated.

It should be noted that an adaptive/dynamic scheme might be influenced by a plurality of parameters, e.g. the amount of data in the transmission, the amount of restrictions on retransmission.

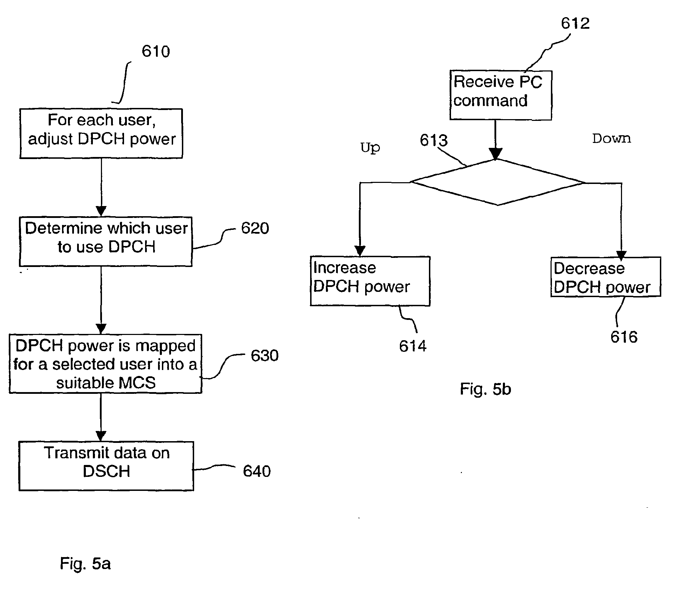

Fig 5a and b illustrates the inventive method in a system having at least two users. First, in block 610 fig. 5a, the DPCH transmit power is adjusted for each user. In fig. 5b, the adjustment of the DPCH transmit power is disclosed in more detail. In block 620, it is determined which user is to use the downlink shared channel (DSCH) within a certain time interval. Then, in block 630, the DPCH power is mapped for a selected user into a suitable MCS for the DSCH. Finally, in block 640, data is transmitted on the DSCH.

Fig. 5b is a flowchart illustrating the adjustment process of block 610 in more detail. In block 612, the PC command transmitted form the mobile station is received by the base station. In block 613, the PC command is interpreted and it is determined from the PC command whether the DPCH power is to be increased or decreased. When the DPCH power is to be increased the flow goes to block 614. When the DPCH power is to be decreased, the flow goes to block 616.

## Claims

1. A method of transmitting information in a radio communication system comprising at least one transmitter and at least one receiver, the method comprising the steps of:
• transmitting first information in a first channel from the at least one transmitter to the at least one receiver, using in the transmitting a modulation and/or coding scheme and adapting the modulation and/or coding scheme to give a secure communication of the first information, and
• transmitting second information in a second channel from the at least one transmitter to the at least one receiver and setting the power used for transmitting in the second channel to give a communication of the second information, **characterized in that** in the step of transmitting, the first information, the choice of the modulation and/or coding scheme is controlled by the level of the power at each instant set for transmitting in the second channel.

2. Method according to claim 1, **characterized in that** the second channel is transmitted from the same transmitter as the first channel.

3. Method according to claim 1, **characterized in that** the second channel is transmitted from one of a plurality of transmitters, comprising the transmitter that transmits the first channel.

4. Method according to any of claim 1-3, **characterized in that** the first physical channel is shared between several users and **in that** each user has a unique second channel wherein the modulation and coding scheme used by the first channel is determined by the instantaneous transmitted power of the second channel, the user of the second channel being currently served by the first channel.

5. Method according to any of claim 1-4, **characterized in that** the transmitter is a base station and the receiver is a mobile station.

6. Method according to any of claim 1-5, **characterized in that** the first channel is a shared downlink channel and the second channel is a dedicated physical channel.

7. Method according to claim 6, **characterized in that** the modulation and/or coding scheme used on the downlink shared channel when transmitting to a specific receiver is controlled by the power control commands transmitted by the receiver in the reverse link.

8. A method according to claim 7, **characterized in that** the power control commands are transmitted in combination with other information.

9. A method according to any of claim 6-8, **characterized in that** the power of the dedicated physical channel is mapped into a suitable modulation and coding scheme for the downlink shared channel.

10. A method according to claim 9, **characterized in that** a varying modulation and coding scheme is used on the downlink shared channel.

11. A method according to claim 9, **characterized in that** the mapping is static.

12. A method according to claim 9, **characterized in that** the mapping is dynamic.

13. A method according to claim 11, **characterized in that** a predefined table is use for mapping the power level to the modulation and coding scheme.

14. A method according to claim 12, **characterized in that** the mapping is changed as a function of some retransmission requests for data blocks being retransmitted over the shared channel.

15. A method according to claim 12, wherein at least two base stations are transmitting at the same time to the same mobile station, **characterized in that** that the power of the DPCH is multiplied with a constant k, k >= 1, said constant being used for determining the modulation and coding scheme of the DSCH, both channels dedicated physical channel, DPCH, and downlink shared channel, DSCH, transmitting from the same base station.

16. A method of modifying the transmission parameters in a radio communication system comprising at least one transmitter, at least one receiver, a first channel for transmitting first information from the at least one transmitter to the at least one receiver, and a second channel for transmitting second information from the at least one transmitter to the at least one receiver, the method comprising the steps of
• setting the power used for transmitting in the second channel; and
• adapting a modulation and/or coding scheme used in transmitting in the first channel, **characterized in that** in the step of adapting, the choice of the modulation and/or coding scheme is controlled by the level of the power at each instant set for transmitting in the second channel.

17. Method according to claim 16, wherein at least two transmitters are transmitting at the same time, **characterized in that** the power of the second channel is multiplied with a constant k.

18. A radio communication system comprising at least one transmitter, at least one receiver, a first channel for transmitting first information from at least one transmitter to the at least one receiver, and a second channel for transmitting second information from the at least one transmitter to the at least one receiver, the system comprising:
• means for setting the power used for transmitting in the second channel, and
• means for adapting a modulation and/or coding scheme used in transmitting in the first channel, **characterized in** comprising
• means for controlling the choice of the modulation and/or coding scheme by means of the level of the power at each instant set for transmitting in the second channel.

19. A computer program product directly loadable into the internal memory of a digital computer comprising software portions for performing the steps of claim 1-17, when said product is run on a computer.

## Patentansprüche

1. Verfahren zur Übertragung von Informationen in einem Funkkommunikationssystem, das mindestens einen Sender und mindestens einen Empfänger umfasst, wobei das Verfahren die folgenden Schritte umfasst:
Übertragung der ersten Information auf einem ersten Kanal von dem mindestens einem Sender zu mindestens einem Empfänger, wobei
bei der Übertragung ein Modulations- und/oder ein Kodierungsschema verwendet wird und das Modulations- und/oder Kodierungsschema angepasst wird, um eine sichere Kommunikation der ersten Information zu gewährleisten, und
Übertragung der zweiten Information in einem zweiten Kanal von mindestens einem Sender zu mindestens einem Empfänger und Einstellen der Leistung zur Übertragung in dem zweiten Kanal um eine Übertragung der zweiten Information zu gewährleisten,
**dadurch gekennzeichnet, dass**
beim Schritt der Übertragung der ersten Information die Wahl des Modulations- und/oder Kodierungsschemas von der Leistungsstärke, die im jeweiligen Augenblick für die Übertragung im zweiten Kanal eingestellt ist, gesteuert wird.

2. Verfahren nach Anspruch 1, **dadurch gekennzeichnet, dass** der zweite Kanal von dem gleichen Sender übertragen wird, wie der erste Kanal.

3. Verfahren nach Anspruch 1, **dadurch gekennzeichnet, dass** der zweite Kanal von einem von mehreren Sendern übertragen wird, welche den Sender umfasst, der den ersten Kanal überträgt.

4. Verfahren nach einem der Ansprüche 1-3, **dadurch gekennzeichnet, dass** der erste physische Kanal von mehreren Benutzern gemeinsam benutzt wird, wobei jeder Benutzer jeweils einen zugewiesenen zweiten Kanal hat, wobei das Modulations- und Kodierungsschema, das im ersten Kanal verwendet wird, von der momentanen Sendeleistung im zweiten Kanal bestimmt wird, wobei der Benutzer des zweiten Kanals momentan vom ersten Kanal bedient wird.

5. Verfahren nach einem der Ansprüche 1-4, **dadurch gekennzeichnet, dass** der Sender eine Basisstation ist und der Empfänger eine mobile Station ist.

6. Verfahren nach einem der Ansprüche 1-5, **dadurch gekennzeichnet, dass** der erste Kanal ein gemeinsamer Abwärtsverbindungskanal ist und dass der zweite Kanal ein zugewiesener physischer Kanal ist.

7. Verfahren nach Anspruch 6, **dadurch gekennzeichnet, dass** das Modulations- und/oder Kodierungsschema, welches auf dem gemeinsamen Abwärtsverbindungskanal zur Übertragung zu einem bestimmten Empfänger verwendet wird, von den Leistungssteuerungsbefehlen, welche vom Empfänger in der entgegengesetzten Verbindung übertragen werden, gesteuert wird.

8. Ein Verfahren nach Anspruch 7, **dadurch gekennzeichnet, dass** die Leistungssteuerungsbefehle zusammen mit anderen Informationen übertragen werden.

9. Verfahren nach einem der Ansprüche 6-8, **dadurch gekennzeichnet, dass** die Leistung des zugewiesenen physischen Kanals in ein geeignetes Modulations- und Kodierungsschema für den gemeinsamen Abwärtsverbindungskanal umgesetzt wird.

10. Verfahren gemäß Anspruch 9, **dadurch gekennzeichnet, dass** ein wechselndes Modulations- und Kodierungsschema im gemeinsamen Abwärtsverbindungskanal verwendet wird.

11. Verfahren gemäß Anspruch 9, **dadurch gekennzeichnet, dass** die Zuordnung statisch ist.

12. Verfahren gemäß Anspruch 9, **dadurch gekennzeichnet, dass** die Zuordnung dynamisch ist.

13. Verfahren gemäß Anspruch 11, **dadurch gekennzeichnet, dass** eine vorbestimmte Tabelle zur Zuordnung der Leistungsstärke zum Modulations- und Kodierungsschema verwendet wird.

14. Verfahren gemäß Anspruch 12, **dadurch gekennzeichnet, dass** die Zuordnung in Abhängigkeit von einigen Aufforderungen zur nochmaligen Sendung von Datenblöcken, die nochmals über den gemeinsamen Kanal gesendet werden, verändert wird.

15. Verfahren gemäß Anspruch 12, wobei mindestens zwei Basisstationen zur gleichen Zeit an die gleiche Mobilstation übertragen, **dadurch gekennzeichnet, dass** die Leistung des DPCH mit einer Konstanten k, k ≥ 1 multipliziert wird, wobei die genannte Konstante zur Bestimmung des Modulations- und Kodierungsschemas des DSCH verwendet wird, wobei beide Kanäle, der zugewiesene physische Kanal DPCH und der gemeinsame Abwärtsverbindungskanal DSCH von der gleichen Basisstation übertragen.

16. Verfahren zur Veränderung der Sendeparameter eines Funkkommunikationssystems, welches zumindest einen Sender, zumindest einen Empfänger, einen ersten Kanal zur Übertragung einer ersten Information von dem zumindest einen Sender zu dem zumindest einen Empfänger, einen zweiten Kanal zur Übertragung einer zweiten Information von dem zumindest einen Sender auf den zumindest einen Empfänger umfasst, wobei das Verfahren die folgenden Schritte umfasst:
Einstellen der Leistung zum Übertragen auf dem zweiten Kanal; und
Anpassen eines Modulations- und/oder Kodierungsschemas, welches zur Übertragung im ersten Kanal verwendet wird,
**dadurch gekennzeichnet, dass**
beim Anpassungsschritt die Wahl des Modulations- und Kodierungsschemas von der momentanen Leistungsstärke, welche zur Übertragung im zweiten Kanal benutzt wird, bestimmt wird.

17. Verfahren nach Anspruch 16, wobei zumindest zwei Sender zur gleichen Zeit übertragen, **dadurch gekennzeichnet, dass** die Leistung des zweiten Kanals mit einer Konstanten k multipliziert wird.

18. Funkkommunikationssystem, welches zumindest einen Sender, zumindest einen Empfänger, einen ersten Kanal zur Übertragung einer ersten Information von dem zumindest einen Sender zu dem zumindest einen Empfänger, einen zweiten Kanal zur Übertragung einer zweiten Information von dem zumindest einen Sender auf den zumindest einen Empfänger umfasst, wobei das System folgendes umfasst:
Mittel zur Einstellung der Leistung, welche zur Übertragung auf den zweiten Kanal verwendet wird, und
Mittel zur Anpassung eines Modulations- und Kodierungsschemas, welches zur Übertragung im ersten Kanal verwendet wird,
**dadurch gekennzeichnet, dass** es enthält:
Mittel zur Steuerung der Auswahl des Modulations- und/oder Kodierungsschemas an Hand der momentanen Leistung, die zur Übertragung im zweiten Kanal eingestellt ist.

19. Ein Computerprogrammprodukt, welches direkt im internen Speicher eines digitalen Computers geladen werden kann und welches Softwaremodule zur Ausführung der Schritte der Ansprüche 1-17 umfasst, wenn dieses Produkt auf einem Computer läuft.

## Revendications

1. Procédé de transmission d'informations dans un système de communication radio comprenant au moins un émetteur et au moins un récepteur, le procédé comprenant les étapes consistant à :
émettre des premières informations sur un premier canal entre ledit au moins un émetteur et ledit au moins un récepteur, en utilisant un mécanisme de modulation et/ou de codage dans l'émission et en adaptant le mécanisme de modulation et/ou de codage afin d'assurer une communication sûre des premières informations, et
émettre des secondes informations sur un second canal entre ledit au moins un émetteur et ledit au moins un récepteur, et régler la puissance utilisée dans l'émission sur le second canal afin d'assurer une communication des secondes informations,
**caractérisé en ce que**, dans l'étape d'émission des premières informations, le choix du mécanisme de modulation et/ou de codage est commandé par le niveau de la puissance réglée à chaque instant pour l'émission sur le second canal.

2. Procédé selon la revendication 1, **caractérisé en ce que** le second canal est émis à partir du même émetteur que le premier canal.

3. Procédé selon la revendication 1, **caractérisé en ce que** le second canal est émis depuis un émetteur parmi une pluralité d'émetteurs qui comprend l'émetteur qui émet le premier canal.

4. Procédé selon l'une quelconque des revendications 1 à 3, **caractérisé en ce que** le premier canal physique est partagé entre plusieurs utilisateurs et **en ce que** chaque utilisateur possède un second canal exclusif, dans lequel le mécanisme de modulation et de codage utilisé sur le premier canal est déterminé par la puissance émise instantanée du second canal, l'utilisateur du second canal étant en cours de desserte par le premier canal.

5. Procédé selon l'une quelconque des revendications 1 à 4, **caractérisé en ce que** l'émetteur est une station de base et le récepteur est une station mobile.

6. Procédé selon l'une quelconque des revendications 1 à 5, **caractérisé en ce que** le premier canal est un canal descendant partagé et le second canal est un canal physique spécialisé.

7. Procédé selon la revendication 6, **caractérisé en ce que** le mécanisme de modulation et/ou de codage utilisé sur le canal descendant partagé, lors de l'émission vers un récepteur spécifique, est commandé par les instructions de commande de la puissance envoyées par le récepteur sur la liaison inverse.

8. Procédé selon la revendication 7, **caractérisé en ce que** les instructions de commande de la puissance sont émises en combinaison avec d'autres informations.

9. Procédé selon l'une quelconque des revendications 6 à 8, **caractérisé en ce que** la puissance du canal physique spécialisé est mise en correspondance avec un mécanisme adéquat de modulation et de codage pour le canal descendant partagé.

10. Procédé selon la revendication 9, **caractérisé en ce qu'**un mécanisme variable de modulation et de codage est utilisé sur le canal descendant partagé.

11. Procédé selon la revendication 9, **caractérisé en ce que** la mise en correspondance est statique.

12. Procédé selon la revendication 9, **caractérisé en ce que** la mise en correspondance est dynamique.

13. Procédé selon la revendication 11, **caractérisé en ce qu'**une table prédéfinie est utilisée pour mettre en correspondance le niveau de puissance et le mécanisme de modulation et de codage.

14. Procédé selon la revendication 12, **caractérisé en ce que** la mise en correspondance est modifiée en fonction de certaines demandes de retransmission pour des blocs de données qui sont retransmis sur le canal partagé.

15. Procédé selon la revendication 12, dans lequel au moins deux stations de base émettent en même temps vers la même station mobile, **caractérisé en ce que** la puissance du canal physique spécialisé est multipliée par une constante k, pour k ≥ 1, ladite constante étant utilisée pour déterminer le mécanisme de modulation et de codage du canal descendant partagé, les deux canaux, canal physique spécialisé DPCH et canal descendant partagé DSCH, étant émis depuis la même station de base.

16. Procédé de modification des paramètres d'émission dans un système de communication radio comprenant au moins un émetteur, au moins un récepteur, un premier canal destiné à émettre des premières informations entre ledit au moins un émetteur et ledit au moins un récepteur et un second canal destiné à émettre des secondes informations entre ledit au moins un émetteur et ledit au moins un récepteur, le procédé comprenant les étapes consistant à :
régler la puissance utilisée dans l'émission sur le second canal ; et
adapter un mécanisme de modulation et/ou de codage utilisé dans l'émission sur le premier canal,
**caractérisé en ce que**, dans l'étape d'adaptation, le choix du mécanisme de modulation et/ou de codage est commandé par le niveau de la puissance réglée à chaque instant pour l'émission sur le second canal.

17. Procédé selon la revendication 16, dans lequel au moins deux émetteurs émettent en même temps, **caractérisé en ce que** la puissance du second canal est multipliée par une constante k.

18. Système de communication radio comprenant au moins un émetteur, au moins un récepteur, un premier canal destiné à émettre des premières informations entre ledit au moins un émetteur et ledit au moins un récepteur, et un second canal destiné à émettre des secondes informations entre ledit au moins un émetteur et ledit au moins un récepteur, le système comprenant :
un moyen destiné à régler la puissance utilisée dans l'émission sur le second canal ; et
un moyen destiné à adapter un mécanisme de modulation et/ou de codage utilisé dans l'émission sur le premier canal, **caractérisé en ce qu'**il comprend :
un moyen destiné à commander le choix du mécanisme de modulation et/ou de codage au moyen du niveau de la puissance réglée à chaque instant pour l'émission sur le second canal.

19. Progiciel d'ordinateur pouvant être chargé directement dans la mémoire interne d'un ordinateur numérique, comprenant des portions logicielles destinées à exécuter les étapes des revendications 1 à 17, lorsque ledit progiciel est mis en oeuvre sur un ordinateur.
